# EUROPÄISCHE PATENTSCHRIFT

(11) **EP 2 529 103 B1**
(45) Veröffentlichungstag und Bekanntmachung des Hinweises auf die Patenterteilung: **22.04.2015**
(21) Anmeldenummer: 11701026.4
(22) Anmeldetag: 03.01.2011
(51) Int. Cl.: F02M 61/16, B21D 26/06, B21D 26/14, B23P 11/00, B21K 25/00, B21D 39/04, F02M 63/00

(54) **VERFAHREN ZUR HOCHDRUCKDICHTEN VERBINDUNG WENIGSTENS EINES PLATTENFÖRMIGEN KÖRPERS MIT EINEM WEITEREN KÖRPER EINES KRAFTSTOFFINJEKTORS SOWIE KRAFTSTOFFINJEKTOR**
METHOD FOR THE HIGH-PRESSURE-TIGHT CONNECTION OF AT LEAST ONE PLATE-SHAPED BODY TO A FURTHER BODY OF A FUEL INJECTOR AND FUEL INJECTOR
PROCÉDÉ DE LIAISON ÉTANCHE À LA HAUTE PRESSION D'AU MOINS UN CORPS EN FORME DE PLAQUE À UN AUTRE CORPS D'UN INJECTEUR DE CARBURANT ET INJECTEUR DE CARBURANT

(30) Priorität: 28.01.2010 DE 102010001311
(43) Veröffentlichungstag der Anmeldung: 05.12.2012
(73) Patentinhaber: Robert Bosch GmbH, 70442 Stuttgart (DE)
(72) Erfinder: NAGEL, Jens-Peter, 70839 Gerlingen (DE)
(86) Internationale Anmeldenummer: PCT/EP2011/050006
(87) Internationale Veröffentlichungsnummer: WO 2011/092040

(56) Entgegenhaltungen:
- WO-A1-2005/066487
- DE-A1- 10 234 723
- DE-A1- 19 902 282
- FR-A1- 2 632 218

## Beschreibung

Die Erfindung betrifft ein Verfahren zur hochdruckdichten Verbindung wenigstens eines plattenförmigen Körpers mit einem weiteren Körper eines Kraftstoffinjektors, wobei eine Spannhülse Einsatz findet, mittels welcher die zu verbindenden Körper axial gegeneinander verspannt werden. Bei dem wenigstens einen plattenförmigen Körper kann es sich beispielsweise um eine Drosselplatte handeln, die es mit einer Ventilplatte und/oder einem anderen Körper hochdruckdicht zu verbinden gilt. Des Weiteren betrifft die Erfindung einen Kraftstoffinjektor sowie die Verwendung eines Hochgeschwindigkeits-Umformverfahrens zur hochdruckdichten Verbindung wenigstens eines plattenförmigen Körpers mit einem weiteren Körper eines Kraftstoffinjektors.

### Stand der Technik

Aus der Offenlegungsschrift DE 199 02 282 A1 geht ein modular aufgebauter Injektor mit mehreren koaxial übereinander angeordneten Injektorteilen hervor. Zur Schaffung eines Injektors mit einer kompakten Bauform, wird zur Verbindung der Injektorteile ein hülsenförmiges Verbindungselement vorgeschlagen, das mit einem Injektorkopf verschraubt wird. Alternativ wird vorgeschlagen, das hülsenförmige Verbindungselement mit dem Injektorkopf durch ein Fügeverfahren, wie beispielsweise durch Schweißen oder Hartlöten, zu verbinden. Hierzu werden die Injektorteile axial gegeneinander vorgespannt.

Um ausgehend von diesem Stand der Technik eine verbesserte Hochdruckdichtigkeit der verbundenen Injektorteile zu erzielen, wird in der Offenlegungsschrift DE 102 34 723 A1 eine hochdruckdichte Verbindungsanordnung für Teile eines Kraftstoffinjektors mit einem Spannelement vorgeschlagen, das nach erfolgter Vorspannung der Fügeflächen oder des Spannelementes über eine Kreiskeilverbindung mit inneren und äußeren Kreiskeilen mit einem Verbindungsteil des Injektors verbunden wird. Der Kreiskeilverbindung kommt dabei ausschließlich die Funktion zu, die mittels eines über einen Kraftsensor überwachtes Zug- oder Druckgliedes aufgebrachte Spannung aufrecht zu erhalten. Die Axialkraft soll somit sehr genau eingestellt werden können. Da die Axialkraft nicht über die Anzugskraft einer Schraubverbindung aufgebracht wird, können etwaige Ungenauigkeiten bei der Einstellung der Axialkraft, wie Gewindetoleranzen oder variierende Reibungsverhältnisse im Gewinde oder an der Spannfläche, ausgeschlossen werden. Als weiterer Vorteil wird genannt, dass die bei Verzicht auf ein Gewinde auch eine Bauteilschwächung durch Kerbwirkung entfällt, so dass das Bauteil höher belastet oder günstiger dimensioniert werden kann.

Die Kreiskeilverbindung nach Art einer kraftschlüssigen Bajonettverbindung setzt jedoch weiterhin eine Drehbewegung des Spannelementes gegenüber dem Verbindungsteil voraus, so dass neben der aus der Vorspannung resultierenden Axialkraft ein Drehmoment aufgebracht wird. Die zu verbindenden Teile sind daher gegen ein Verdrehen zu sichern. Eine Verdrehsicherung kann beispielsweise durch den Einsatz von Positionier- oder Fixierstiften realisiert werden. Nachteilig ist ferner, dass die inneren und äußeren Kreiskeile aufwendig herzustellen sind. Denn zur Realisierung einer kraft- bzw. reibschlüssigen Verbindung, die eine über den Umfang gleichmäßige Krafteinleitung ermöglichen soll, sind hohe Anforderungen an die geometrische Genauigkeit (Form-, Maß- oder Lagetoleranzen) und an die Oberflächenqualität der Kreiskeile zu stellen. Eine über den Umfang ungleichmäßige Krafteinleitung würde zu einer unerwünschten Streuung der Axialkraft führen, so dass eine hochdruckdichte Verbindung nicht mehr gewährleistet ist.

Andere ähnlichen Verfahren und kraftstoffinjektoren sind aus den WO 2005/066487 und FR-A-2692218 bekannt.

Die Aufgabe der vorliegenden Erfindung besteht darin, ein Verfahren zur hochdruckdichten Verbindung wenigstens eines plattenförmigen Körpers mit einem weiteren Körper eines Kraftstoffinjektors bereit zu stellen, das einfach durchzuführen ist. Ferner ist es Aufgabe der Erfindung einen einfach aufgebauten Kraftstoffinjektor zu schaffen.

Zur Lösung der Aufgaben wird ein Verfahren mit den Merkmalen des Anspruchs 1 sowie ein Kraftstoffinjektor mit den Merkmalen des Anspruchs 7 vorgeschlagen. Vorteilhafte Weiterbildungen des erfindungsgemäßen Verfahrens bzw. des erfindungsgemäßen Kraftstoffinjektors werden in den jeweiligen Unteransprüchen angegeben.

### Offenbarung der Erfindung

Das vorgeschlagene Verfahren zur hochdruckdichten Verbindung wenigstens eines plattenförmigen Körpers mit einem weiteren Körper eines Kraftstoffinjektors sieht den Einsatz einer Spannhülse vor, mittels welcher die zu verbindenden Körper axial gegeneinander verspannt werden. Erfindungsgemäß wird als weiterer Körper ein mit der Spannhülse zusammenwirkender Haltekörper mit wenigstens einer außenumfangseitig angeordneten, in einer Radialebene umlaufend ausgebildeten Nut eingesetzt. Darüber hinaus umfasst das Verfahren die folgenden Schritte:
- Fixieren des Haltekörpers,
- Anlegen des wenigstens einen plattenförmigen Körpers und koaxiales Ausrichten der zu verbindenden Körper,
- Fügen der Spannhülse über die zu verbindenden Körper,
- Strecken der Spannhülse durch Aufbringen einer Axialkraft Fₐₓ, so dass in der Spannhülse eine Spannung erzeugt wird,
- während der Streckung Herstellung einer formschlüssigen Verbindung der Spannhülse (3) mit dem Haltekörper (4) durch Einsatz eines Hochgeschwindigkeits-Umformverfahrens, wobei die formschlüssige Verbindung durch eine Verformung der Spannhülse (3) im Bereich der Nut (5) bewirkt wird, und
- Entlasten der Spannhülse.

Nach der Entlastung verbleibt eine Restspannung in der Spannhülse, welche die von der Spannhülse umschlossenen Körper gegeneinander presst, so dass eine hochdruckdichte Verbindung gewährleistet ist.

Das Fügen der Teile, insbesondere das Aufsetzen bzw. Aufschieben der Spannhülse auf die zu verbindenden Teile erfolgt vollkommen drehmomentfrei. Gleiches gilt für den Umformungsprozess zur Herstellung einer formschlüssigen Verbindung der Spannhülse mit dem Haltekörper. Demzufolge wird in keinem Herstellungsschritt ein Drehmoment auf einen der zu verbindenden Körper übertragen, so dass der Einsatz zusätzlicher Stifte als Verdrehsicherung entbehrlich ist. Ferner ist der Einsatz von O-Ringen möglich, da keine Zerstörung durch ein Abscheren der O-Ringe zu erwarten ist. Darüber hinaus können die Spannhülse und der Haltekörper einfache Geometrien aufweisen, da die Ausbildung eines Gewindes entfällt. Auch an die Oberflächenbeschaffenheit der Bauteile können im Vergleich zu einer Schraubverbindung geringere Anfoderungen gestellt werden, da die Rauheit vernachlässigbar ist. Insoweit sind auch reibmindernde Schichten bzw. Beschichtungen entbehrlich, um eine gleichmäßige Krafteinleitung über den Umfang zu gewährleisten. Aufgrund der hohen Umformgeschwindigkeit, durch welche unmittelbar ein Fließen des Werkstoffs über den gesamten Umfang eintritt, wird zudem ein Auffalten und/oder ein Knicken der Spannhülse verhindert. Ferner gewährleistet die dabei zustande kommende formschlüssige Verbindung eine zusätzliche Abdichtung.

Vorzugsweise wird die Elektromagnetische Pulsumformung als Hochgeschwindigkeits-Umformverfahren eingesetzt. Bei der Elektromagnetischen Pulsumformung erfolgt die Umformung kontaktfrei, so dass Oberflächen und/oder etwaige Beschichtungen unbeschädigt bleiben. Zudem ermöglicht diese Art der Umformung eine hochdruckdichte formschlüssige Verbindung der zu verbindenden Bauteile, selbst wenn diese aus unterschiedlichen Werkstoffen bestehen. Eine Vor- oder Nachbehandlung der zu verbindenden Bauteile ist nicht erforderlich.

Zur Durchführung des Verfahrens wird eine Spule um die Spannhülse auf Höhe der Nut des Haltekörpers gelegt. Durch Anlegen eines zeitlich sich verändernden Magnetfeldes werden in der Spannhülse Ströme induziert, welche die erforderliche Umformkraft bewirken. Die Umformkraft ist u.a. abhängig von dem jeweiligen Material bzw. der jeweiligen Leitfähigkeit der Spule und der Spannhülse sowie der Stärke des angelegten Magnetfeldes. Bei schlechter Leitfähigkeit des Hülsenmaterials (z.B. rostfreier Stahl) kann ein sogenannter Treiber (z.B. aus Aluminium) eingesetzt werden, der einmal verwendet wird und nach erfolgter Umformung verloren ist. Einfluss auf die Umformkraft hat ferner die Geometrie der im Haltekörper vorgesehenen Nut, insbesondere deren Tiefe und/oder deren Radius.

Alternativ zur Magnetumformung können auch weitere Hochgeschwindigkeits-Umformverfahren, wie beispielsweise die Explosionsumformung oder die Unterwasserfunkenentladung, eingesetzt werden.

Bei Einsatz des Elektromagnetischen Pulsumformverfahrens wird bevorzugt die zur Umformung erforderliche Magnetkraft oder erforderliche Energie zuvor durch Simulation ermittelt. Zur Berechnung kann ein hydrostatischer Druck vorzugsweise im Bereich von 300 bis 1000 N/mm², beispielsweise 500 N/mm², als Ersatzgröße eingesetzt werden.

Die Magnetkraft bewirkt, dass nach der Umformung der Spannhülse die Nut im Haltekörper vorzugsweise vollständig von dem Material der Spannhülse ausgefüllt wird. Ein hoher Füllgrad vermag insbesondere einer späteren Relaxation im Betrieb des Kraftstoffinjektors entgegen zu wirken.

Weiterhin bevorzugt wird zum Aufbringen der Axialkraft Fₐₓ ein hohlzylindrischer Stempel verwendet, der von außen an eine im Wesentlichen radial verlaufende Schulter der Spannhülse angesetzt wird. Die hohlzylindrische Form des Stempels ermöglicht ein Hindurchführen von Teilen des Injektors. Insbesondere kann ein als Düsenkörper ausgebildetes Innjektorteil hindurch geführt werden. Alternativ zu einem hohlzylindrischen Stempel können aber auch andere Druck- oder Zugwerkzeuge zum Strecken der Spannhülse Einsatz finden. Durch die an der Spannhülse ausgebildete im Wesentlichen radial verlaufende Schulter wird die Position der Krafteinleitung definiert.

Vorzugsweise ist die von außen aufgebrachte Axialkraft Fₐₓ größer als eine zuvor berechnete, zur hochdruckdichten Verbindung der Körper erforderliche Axialkraft gewählt. Weiterhin vorzugsweise beträgt die Axialkraft Fₐₓ > 40 kN, damit nach der Entlastung der Spannhülse eine zur hochdruckdichten Verbindung ausreichende Restspannung verbleibt. Beispielsweise kann die Axialkraft Fₐₓ = 50 kN betragen. Bei der Bestimmung der Axialkraft Fₐₓ ist ferner darauf zu achten, dass die Materialstreckgrenze der Spannhülse nicht überschritten wird, um eine dauerhafte Verformung der Spannhülse zu verhindern. Weitere bei der Bestimmung der Axialkraft Fₐₓ relevante Einflussgrößen sind die Wandstärke und die Gesamtlänge der Spannhülse sowie die Position der Krafteinleitung, d.h. die Position der im Wesentlichen radial verlaufenden Schulter zum Ansetzen des Zug- oder Druckwerkzeuges.

Der zur Lösung der eingangs gestellten Aufgaben vorgeschlagene Kraftstoffinjektor mit wenigstens einer Spannhülse und einem Haltekörper zeichnet sich erfindungsgemäß dadurch aus, dass der Haltekörper wenigstens eine außenumfangseitig angeordnete, in einer Radialebene umlaufend ausgebildete Nut aufweist, in welche ein mittels eines Hochgeschwindigkeits-Umformverfahrens umgeformter Umfangsbereich der Spannhülse formschlüssig eingreift. Der Formschluss wird vorzugsweise durch Umformen eines Ringabschnitts der Spannhülse bewirkt, so dass durch den Formschluss zugleich eine zusätzliche Abdichtung realisiert wird. Die Nut des Haltekörpers unterscheidet sich von einer als Gewindegang dienenden Nut dadurch, dass sie in einer Radialebene umlaufend, d.h. in einer Ebene senkrecht zur Längsachse des Haltekörpers ausgebildet ist. Eine als Gewindegang dienende Nut besitzt dagegen eine Steigung und ist demzufolge nicht in einer Radialebene angeordnet. Zudem besitzt eine als Gewindegang dienende Nut einen wesentlich kleineren Querschnitt und eine andere Geomentrie.

Durch die gewindefreie Verbindung der Spannhülse mit dem Haltekörper werden auf die zu verbindenden Körper, die mittels der Spannhülse axial gegeneinander verspannt werden, keine Drehmomente ausgeübt. Der Einsatz von Stiften als Verdrehsicherung kann somit entfallen. Der Wegfall einer Gewindeverbindung besitzt darüber hinaus den Vorteil, dass die Anforderungen hinsichtlich Oberflächenqualität und der Maßhaltigkeit der zu verbindenden Bauteile weniger hoch sind, um eine über den Umfang gleichmäßige Krafteinleitung zu bewirken. Insoweit weist der vorgeschlagene Kraftstoffinjektor die bereits im Zusammenhang mit dem erfindungsgemäßen Verfahren beschriebenen Vorteile auf.

Die im Haltekörper ausgebildete Nut besitzt weiterhin vorzugsweise einen kreisbogenförmigen Querschnitt. Alternativ kann auch ein trapezförmiger oder rechteckiger Querschnitt gewählt werden. Sofern Ecken ausgebildet werden sind diese vorzugsweise gerundet ausgeführt. Die Nutgeometrie, insbesondere die Nuttiefe und/oder der Nutradius, hat Einfluss auf die Auspresskraft, d.h. die Kraft, die ein Ausreißen der Spannhülse bewirkt. Durch eine Optimierung der Nutgeometrie kann demnach eine Erhöhung der Auspresskraft bewirkt werden. Während geringe Nuttiefen eine geringe Auspresskraft erfordern, zugleich jedoch gut ausformbar sind, erfordern größere Nuttiefen zwar eine größere Auspresskraft, sind zugleich jedoch deutlich schwieriger auszuformen. Vergleichbares gilt in Bezug auf den Nutradius bei kreisbogenförmigen Nutquerschnitten, wobei mit zunehmendem Radius die erforderliche Auspresskraft abnimmt.

Die Spannhülse des vorgeschlagenen Kraftstoffinjektors weist weiterhin vorzugsweise eine im Wesentlichen radial verlaufende Schulter zur Anlage eines Umformwerkzeuges auf. Bei der Anordnung der Schulter ist zu berücksichtigen, dass die Schulter die Position der Krafteinwirkung vorgibt und somit gemeinsam mit der Wandstärke und der Gesamtlänge der Spannhülse Einfluss auf die erforderliche Axialkraft Fₐₓ hat. Eine weitere radial verlaufende Schulter ist vorzugsweise innenumfangsseitig als Anlagefläche für einen plattenförmigen Körper ausgebildet, beispielsweise im Bereich einer Bodenfläche der Spannhülse.

Bevozugte Ausführungsformen der Erfindung werden nachfolgend anhand der Zeichnungen näher beschrieben. Diese zeigen:
- Fig. 1: einen Längsschnitt durch einen Kraftstoffinjektor im Bereich einer Spannhülse gemäß dem Stand der Technik,
- Fig. 2a: einen Längsschnitt durch die zu verbindenden Körper eines erfindungsgemäßen Kraftstoffinjektor in einer Explosionsdarstellung,
- Fig. 2b: einen Längsschnitt durch die zu verbindenden Körper entsprechend der Fig. 2a jedoch in gefügter Anordnung,
- Fig. 2c: einen Querschnitt durch den Haltekörper der Fig. 2a und 2b,
- Fig. 2d: einen Detailausschnitt aus Fig. 2b und
- Fig. 3a-d: verschiedene Geometrien der im Haltekörper ausgebildeten Nut.

### Ausführliche Beschreibung der Zeichnungen

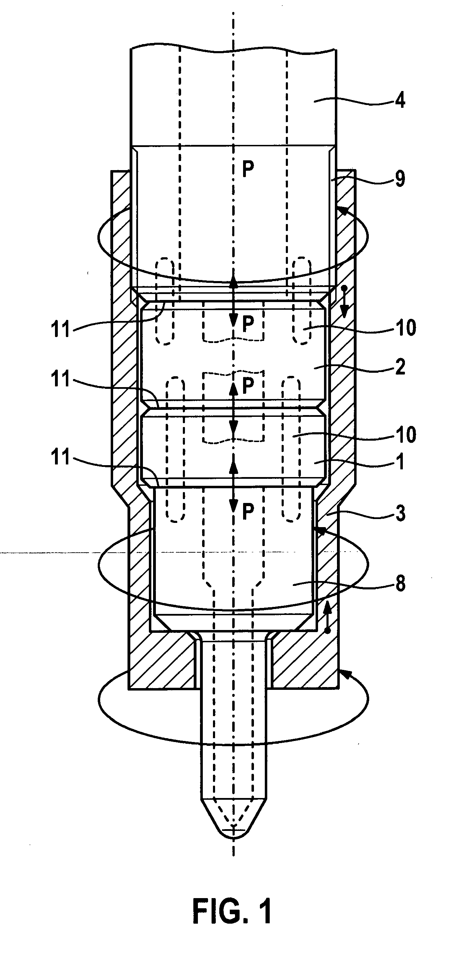

Der Darstellung der Fig. 1 sind ein erster und ein zweiter plattenförmiger Körper 1, 2 zu entnehmen, wobei der erste plattenförmige Körper 1 eine Drosselplatte und der zweite plattenförmige Körper 2 eine Ventilplatte ist, zwischen denen eine erste Dichtstelle 11 ausgebildet wird. Eine weitere Dichtstelle 11 wird jeweils im Anschlussbereich der Ventilplatte 2 mit einem Haltekörper 4 und entsprechend im Anschlussbereich der Drosselplatte 1 mit einem Düsenkörper 8 ausgebildet. Da sämtliche Körper 1, 2, 4 und 8 von einer Bohrung durchsetzt sind (nicht dargestellt), die im Betrieb des Kraftstoffinjektors von Hochdruck beaufschlagt wird, sind die sich zwischen den Kontaktflächen der Körper 1, 2, 4, 8 ergebenden Dichtstellen 11 hochdruckdicht auszuführen. Es gilt demnach der aus dem Betriebsdruck resultierenden Kraft P (siehe Doppelpfeile) eine Axialkraft entgegenzusetzen, die eine dichtende Anlage der Körper 1, 2, 4, 8 im Bereich der jeweiligen Kontaktflächen gewährleistet. Dies wird bei dem vorliegenden, aus dem Stand der Technik bekannten Beispiel durch eine Spannhülse 3 bewirkt, die mit dem Haltekörper 4 über eine Gewindeverbindung 9 formschlüssig verbunden ist. Die Spannhülse 3 umgibt dabei die Körper 1, 2, 4, 8, so dass über die Verschraubung eine Anzugskraft bewirkt werden kann (siehe einfache Pfeile), mittels welcher die Körper 1, 2, 4, 8 axial gegeneinander verspannt werden. Durch die Verschraubung der Spannhülse 3 mit dem Haltekörper 4 werden jedoch auch Drehmomente eingebracht (siehe bogenförmig verlaufende Pfeile), die zu einer Verdrehung der Körper 1, 2, 4, 8 zueinander führen können. Um eine Verdrehung der Körper 1, 2, 4, 8 zueinander zu verhindern, sind im Bereich der Dichtstellen 11 Fixierstifte 10 in die angrenzenden Kontaktflächen der Körper 1, 2, 4, 8 eingesetzt.

Derartige Fixierstifte sind bei Einsatz des erfindungsgemäßen Verfahrens zur hochdruckdichten Verbindung wenigstens zweier Körper 1, 2, 4 eines Kraftstoffinjektors entbehrlich. Denn es wird lediglich eine Axialkraft Fₐₓ auf die Spannhülse 3 aufgebracht, die nach formschlüssiger Verbindung der Spannhülse 3 mit dem Haltekörper 4 und nach Entlastung der Spannhülse 3 eine die Körper 1, 2, 4, 8 gegeneinander vorspannende Restspannung bewirkt, die zudem eine hochdruckdichte Verbindung gewährleistet. Die formschlüssige Verbindung der Spannhülse 3 mit dem Haltekörper 4 erfolgt dabei durch Einsatz eines Hochgeschwindigkeits-Umformverfahrens.

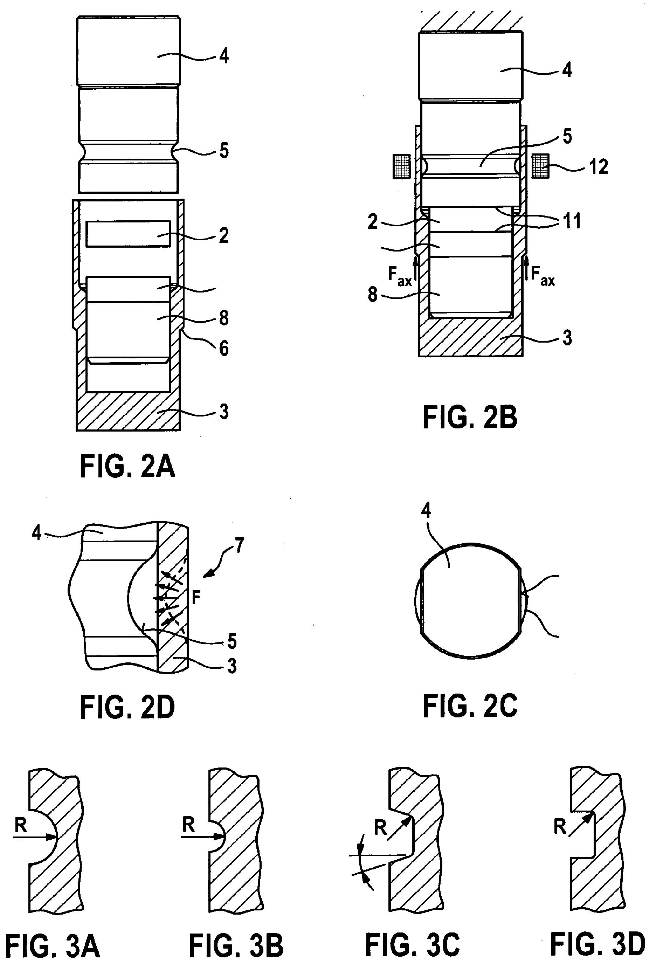

Den Fig. 2a bis 2d sind die wesentlichen Teile eines erfindungsgemäßen Kraftstoffinjektors, das heißt eine Spannhülse 3, ein Haltekörper 4 sowie zwei plattenförmige Körper 1, 2 und ein Düsenkörper 8 zu entnehmen, die es mittels des vorstehend beschriebenen erfindungsgemäßen Verfahrens hochdruckdicht zu verbinden gilt. Während die Fig. 2a die Teile in einer Explosionsdarstellung wiedergibt, das heißt vor dem Fügen, zeigt die Fig. 2b die von der Spannhülse 3 umgebenen, aneinandergelegten und koaxial ausgerichteten Körper 1, 2, 4, 8 kurz vor dem Umformen der Spannhülse 3 zur Herstellung einer formschlüssigen Verbindung zwischen der Spannhülse 3 und dem Haltekörper 4 im Bereich einer umlaufenden Nut 5 des Haltekörpers 4. Um die formschlüssige Verbindung herzustellen, wird die Spannhülse 3 zunächst gestreckt. Hierzu wird im Bereich einer im Wesentlichen radial verlaufenden Schulter 6 der Spannhülse 3 durch Anlage eines Druckwerkzeuges (nicht dargestellt) eine Axialkraft Fₐₓ aufgebracht. Während der Streckung erfolgt die Umformung durch Einsatz eines Hochgeschwindigkeits-Umformverfahrens, vorliegend mittels Elektromagnetischer Pulsumformung. Hierzu wird die Spannhülse 3 auf der Höhe der Nut 5 des Haltekörpers 4 von einer Spule 12 umgeben, wobei zwischen der Spule 12 und der Spannhülse 3 ein ringförmiger Luftspalt verbleibt. Bei Bestromung der Spule 12 wird ein sich zeitlich veränderndes Magnetfeld aufgebaut, das in - Abhängigkeit von der Leitfähigkeit des Hülsenmaterials - Ströme in der Spannhülse 3 induziert. Auf diese Ströme übt das Magnetfeld Kräfte aus (siehe Pfeile in Fig. 2d), die eine Einformung der Spannhülse 3 in die Nut 5 des Haltekörpers 4 bewirken. Die Spannhülse 3 wird demnach in einem ringförmigen Umfangsbereich 7 umgeformt, wodurch sich eine formschlüssige Verbindung der Spannhülse 3 mit dem Haltekörper 4 ergibt. Die formschlüssige Verbindung gewährleistet zudem eine zusätzliche Abdichtung.

Während die Spannhülse 3 zunächst gestreckt und dann umgeformt wird, bleibt der Haltekörper 4 in seiner Lage fixiert. Die Fixierung kann im Bereich vorhandener Pratzflächen erfolgen. Diese können, wie beispielsweise in Fig. 2c dargestellt, durch Anschliffe 13 im Bereich der Umfangsfläche des Haltekörpers 4 ausgebildet sein.

Die Auspresskraft der im Bereich der Nut 5 bewirkten formschlüssigen Verbindung der Spannhülse 3 mit dem Haltekörper 4 hängt insbesondere von der gewählten Nutgeometrie ab. In den Fig. 3a bis 3d sind daher beispielhaft verschiedene mögliche Nutgeometrien dargestellt. Die Fig. 3a und 3b zeigen jeweils eine Nut 5 mit einem kreisbogenförmig verlaufenden Querschnitt, wobei der Unterschied in dem jeweils gewählten Radius R besteht. Die erforderliche Auspresskraft, die notwendig ist, um ein Ausreißen der Spannhülse 3 aus der Nut 5 des Haltekörpers 4 zu bewirken, ist bei der Ausführungsform der Fig. 3b größer. Die Auspresskraft steigt weiter, wenn anstelle des kreisbogenförmig verlaufenden Querschnitts ein trapezförmiger Querschnitt mit steilen Nutflanken, d.h. mit kleinem Winkel α, gewählt wird. Am größten ist die erforderliche Auspresskraft bei einer im Wesentlichen rechteckigen Nutgeometrie entsprechend Fig. 3d. Um das Ausformen der Nut zu erleichtern, sind die Ecken im Bereich des Übergangs der Nutflanken in den Nutgrund gerundet ausgeführt. Der Rundungsradius ist mit R angegeben.

Zwar ist eine hohe Auspresskraft erwünscht, um ein Ausreißen der Spannhülse 3 aus der Nut 5 des Haltekörpers 4 zu verhindern, zugleich soll die Nutgeometrie aber auch eine gute Ausformbarkeit besitzen. Diese ist wiederum bei einer geringen Nuttiefe und großen Radien gegeben. Hier gilt es eine Optimierung der Nutgeometrie anwendungsfallbezogen vorzunehmen.

## Patentansprüche

1. Verfahren zur hochdruckdichten Verbindung wenigstens eines plattenförmigen Körpers (1, 2) mit einem weiteren Körper eines Kraftstoffinjektors, wobei eine Spannhülse (3) eingesetzt wird, mittels welcher die zu verbindenden Körper (1, 2) axial gegeneinander verspannt werden,
**dadurch gekennzeichnet, dass** als weiterer Körper ein mit der Spannhülse (3) zusammenwirkender Haltekörper (4) mit wenigstens einer außenumfangseitig angeordneten, in einer Radialebene umlaufend ausgebildeten Nut (5) eingesetzt wird und, dass das Verfahren die folgenden Schritte umfasst:
- Fixieren des Haltekörpers (4),
- Anlegen des wenigstens einen plattenförmigen Körpers (1, 2) und koaxiales Ausrichten der zu verbindenden Körper (1, 2, 4),
- Fügen der Spannhülse (3) über die zu verbindenden Körper (1, 2, 4),
- Strecken der Spannhülse (3) durch Aufbringen einer Axialkraft Fₐₓ, so dass in der Spannhülse (3) eine Spannung erzeugt wird,
- während der Streckung Herstellung einer formschlüssigen Verbindung der Spannhülse (3) mit dem Haltekörper (4) durch Einsatz eines Hochgeschwindigkeits-Umformverfahrens, wobei die formschlüssige Verbindung durch eine Verformung der Spannhülse (3) im Bereich der Nut (5) bewirkt wird, und
- Entlasten der Spannhülse (3).

2. Verfahren nach Anspruch 1,
**dadurch gekennzeichnet, dass** die Elektromagnetische Pulsumformung als Hochgeschwindigkeits-Umformverfahren eingesetzt wird.

3. Verfahren nach Anspruch 2,
**dadurch gekennzeichnet, dass** die bei Einsatz des Elektromagnetischen Pulsumformverfahrens zur Umformung der Spannhülse (3) erforderliche Magnetkraft oder erforderliche Energie zuvor durch Simulation ermittelt wird.

4. Verfahren nach einem der vorhergehenden Ansprüche,
**dadurch gekennzeichnet, dass** nach der Umformung der Spannhülse (3) die Nut (5) im Haltekörper (4) vollständig von dem Material der Spannhülse (3) ausgefüllt wird.

5. Verfahren nach einem der vorhergehenden Ansprüche,
**dadurch gekennzeichnet, dass** zum Aufbringen der Axialkraft Fₐₓ ein hohlzylindrischer Stempel verwendet wird, der von außen an eine im Wesentlichen radial verlaufende Schulter (6) der Spannhülse (3) angesetzt wird.

6. Verfahren nach einem der vorhergehenden Ansprüche,
**dadurch gekennzeichnet, dass** die von außen aufgebrachte Axialkraft Fₐₓ größer gewählt ist als eine zuvor berechnete, zur hochdruckdichten Verbindung der Körper (1, 2, 4) erforderliche Axialkraft.

7. Kraftstoffinjektor zum Einspritzen von Kraftstoff in den Brennraum einer Brennkraftmaschine umfassend wenigstens einen plattenförmigen hochdruckbeaufschlagten Körper (1, 2), eine Spannhülse (3) und einen Haltekörper (4), wobei die Spannhülse (3) und der Haltekörper (4) derart zusammenwirken, dass der wenigstens eine plattenförmige Körper (1, 2) mit einem weiteren Körper und/oder dem Haltekörper (4) hochdruckdicht verbunden ist,
**dadurch gekennzeichnet, dass** der Haltekörper (4) wenigstens eine außenumfangseitig angeordnete, in einer Radialebene umlaufend ausgebildete Nut (5) aufweist, in welche ein mittels eines Hochgeschwindigkeits-Umformverfahrens umgeformter Umfangsbereich (7) der Spannhülse (3) formschlüssig eingreift.

8. Kraftstoffinjektor nach Anspruch 7,
**dadurch gekennzeichnet, dass** die Nut (5) einen kreisbogenförmigen oder trapezförmigen oder rechteckigen Querschnitt und/oder gerundete Ecken besitzt.

9. Kraftstoffinjekor nach Anspruch 7 oder 8,
**dadurch gekennzeichnet, dass** die Spannhülse (3) eine im Wesentlichen radial verlaufende Schulter (6) zur Anlage eines Umformwerkzeuges aufweist.

## Claims

1. Method for producing a high-pressure-tight connection between at least one plate-shaped body (1, 2) and a further body of a fuel injector, wherein use is made of a clamping sleeve (3) by means of which the two bodies (1, 2) to be connected to one another are braced axially against one another,
**characterized in that**, as a further body, use is made of a holding body (4) which interacts with the clamping sleeve (3) and which has at least one groove (5) arranged on an outer circumferential side and formed in encircling fashion in a radial plane, and **in that** the method comprises the following steps:
- fixing the holding body (4),
- mounting the at least one plate-shaped body (1, 2) and coaxially aligning the bodies (1, 2, 4) to be connected,
- fitting the clamping sleeve (3) over the bodies (1, 2, 4) to be connected,
- stretching the clamping sleeve (3) by applying an axial force Fₐₓ, such that a stress is generated in the clamping sleeve (3),
- during the stretching, producing a positively locking connection between the clamping sleeve (3) and the holding body (4) through the use of a high-speed deformation process, wherein the positively locking connection is effected by way of a deformation of the clamping sleeve (3) in the region of the groove (5), and
- relieving the clamping sleeve (3) of stress.

2. Method according to Claim 1,
**characterized in that** electromagnetic pulse deformation is used as a high-speed deformation process.

3. Method according to Claim 2,
**characterized in that** the magnetic force or energy required for the deformation of the clamping sleeve (3) using the electromagnetic pulse deformation process is determined in advance by simulation.

4. Method according to one of the preceding claims, **characterized in that**, after the deformation of the clamping sleeve (3), the groove (5) in the holding body (4) is completely filled by the material of the clamping sleeve (3).

5. Method according to one of the preceding claims, **characterized in that**, to apply the axial force Fₐₓ, use is made of a hollow cylindrical plunger which is mounted externally onto a substantially radially running shoulder (6) of the clamping sleeve (3).

6. Method according to one of the preceding claims, **characterized in that** the externally applied axial force Fₐₓ is selected to be greater than a precalculated axial force required for producing the high-pressure-tight connection of the bodies (1, 2, 4).

7. Fuel injector for injecting fuel into the combustion chamber of an internal combustion engine, comprising at least one plate-shaped body (1, 2) charged with high pressure, a clamping sleeve (3), and a holding body (4), wherein the clamping sleeve (3) and the holding body (4) interact such that the at least one plate-shaped body (1, 2) is connected in high-pressure-tight fashion to a further body and/or to the holding body (4),
**characterized in that** the holding body (4) has at least one groove (5) arranged on an outer circumferential side and formed in encircling fashion in a radial plane, into which groove a circumferential region (7), deformed by way of a high-speed deformation process, of the clamping sleeve (3) engages in positively locking fashion.

8. Fuel injector according to Claim 7,
**characterized in that** the groove (5) has a circular arc-shaped or trapezoidal or rectangular cross section and/or rounded corners.

9. Fuel injector according to Claim 7 or 8, **characterized in that** the clamping sleeve (3) has a substantially radially running shoulder (6) for the abutment of a deformation tool.

## Revendications

1. Procédé de liaison étanche à haute pression d'au moins un corps en forme de plaque (1, 2) à un autre corps d'un injecteur de carburant, une douille de serrage (3) étant utilisée, au moyen de laquelle les corps à raccorder (1, 2) sont serrés axialement l'un contre l'autre,
**caractérisé en ce qu'**un corps de retenue (4) coopérant avec la douille de serrage (3) et doté d'au moins une rainure (5) disposée du côté de la périphérie extérieure et réalisée de manière périphérique dans un plan radial est utilisé en tant qu'autre corps, et **en ce que** le procédé comporte les étapes suivantes :
- fixation du corps de retenue (4),
- application de l'au moins un corps en forme de plaque (1, 2) et orientation coaxiale des corps à relier (1, 2, 4),
- assemblage de la douille de serrage (3) sur les corps à relier (1, 2, 4),
- étirage de la douille de serrage (3) par application d'une force axiale Fₐₓ, de telle sorte qu'une tension soit produite dans la douille de serrage (3),
- pendant l'étirage, réalisation d'une liaison par engagement par complémentarité de formes de la douille de serrage (3) au corps de retenue (4) par utilisation d'un procédé de formage à grande vitesse, la liaison par engagement par complémentarité de formes étant provoquée par une déformation de la douille de serrage (3) dans la région de la rainure (5), et
- détente de la douille de serrage (3).

2. Procédé selon la revendication 1,
**caractérisé en ce que** le formage par impulsions électromagnétiques est utilisé en tant que procédé de formage à grande vitesse.

3. Procédé selon la revendication 2,
**caractérisé en ce que** la force magnétique nécessaire ou l'énergie nécessaire lors de l'utilisation du procédé de formage par impulsions électromagnétiques pour le formage de la douille de serrage (3) est déterminée préalablement par simulation.

4. Procédé selon l'une quelconque des revendications précédentes,
**caractérisé en ce qu'**après le formage de la douille de serrage (3), la rainure (5) dans le corps de retenue (4) est complètement remplie du matériau de la douille de serrage (3).

5. Procédé selon l'une quelconque des revendications précédentes,
**caractérisé en ce qu'**un poinçon cylindrique creux est utilisé pour l'application de la force axiale Fₐₓ, lequel poinçon est mis en place depuis l'extérieur sur un épaulement (6) s'étendant essentiellement radialement de la douille de serrage (3).

6. Procédé selon l'une quelconque des revendications précédentes,
**caractérisé en ce que** la force axiale Fₐₓ appliquée depuis l'extérieur est sélectionnée de manière à être supérieure à une force axiale calculée préalablement et nécessaire à la liaison étanche à haute pression des corps (1, 2, 4).

7. Injecteur de carburant pour l'injection de carburant dans la chambre de combustion d'un moteur à combustion interne comportant au moins un corps (1, 2) en forme de plaque sollicité par une haute pression, une douille de serrage (3) et un corps de retenue (4), la douille de serrage (3) et le corps de retenue (4) coopérant de telle sorte que l'au moins un corps en forme de plaque (1, 2) soit relié, de manière étanche à haute pression, à un autre corps et/ou au corps de retenue (4), **caractérisé en ce que** le corps de retenue (4) comprend au moins une rainure (5) disposée du côté de la périphérie extérieure et réalisée de manière périphérique dans un plan radial, dans laquelle vient en prise par engagement par complémentarité de formes une région périphérique (7), formée au moyen d'un procédé de formage à grande vitesse, de la douille de serrage (3).

8. Injecteur de carburant selon la revendication 7, **caractérisé en ce que** la rainure (5) présente une section transversale en forme d'arc de cercle ou en forme de trapèze ou rectangulaire et/ou des coins arrondis.

9. Injecteur de carburant selon la revendication 7 ou 8,
**caractérisé en ce que** la douille de serrage (3) comprend un épaulement (6) s'étendant essentiellement radialement pour l'appui d'un outil de formage.
